# FASCICULE DE BREVET EUROPEEN

(11) **EP 3 528 675 B1**
(45) Date de publication et mention de la délivrance du brevet: **11.11.2020**
(21) Numéro de dépôt: 17797691.7
(22) Date de dépôt: 23.10.2017
(51) Int. Cl.: A47J 43/07, A47J 43/044

(54) **APPAREIL ÉLECTROMÉNAGER DE PRÉPARATION CULINAIRE CHAUFFANT COMPORTANT UNE SÉCURITÉ DE DÉVERROUILLAGE**
ELEKTRISCHE HAUSHALTSAUFWÄRMEVORRICHTUNG ZUR ZUBEREITUNG VON LEBENSMITTELN MIT EINEM ENTRIEGELUNGSSICHERHEITSSYSTEM
ELECTRICAL HOUSEHOLD HEATING FOOD-PREPARATION APPLIANCE COMPRISING AN UNLOCKING SAFETY SYSTEM

(30) Priorité: 24.10.2016 FR 1660292
(43) Date de publication de la demande: 28.08.2019
(73) Titulaire: SEB S.A., 69130 Ecully (FR)
(72) Inventeur: BESSONNET, Dominique, 64420 Artigueloutan (FR); CHARLES, Patrick, 65290 Louey (FR); DESHAYES, Jean-Louis, 53700 Averton (FR)
(74) Mandataire: SEB Developpement Brevets
(86) Numéro de dépôt international: PCT/FR2017/052909
(87) Numéro de publication internationale: WO 2018/078262

(56) Documents cités:
- WO-A1-2015/137981
- CN-U- 202 051 548

## Description

La présente invention concerne le domaine technique des appareils électroménagers de préparation culinaire comportant un récipient de travail, une partie supérieure verrouillée par rotation avec le récipient de travail, et un dispositif de chauffe électrique pour chauffer les aliments contenus dans le récipient de travail.

La présente invention concerne plus particulièrement, mais non exclusivement, les appareils du type précité dans lesquels la partie supérieure comporte un boîtier motorisé supérieur disposé au dessus du récipient de travail pour entraîner en rotation un accessoire de travail rotatif agencé dans le récipient de travail.

Il est connu du document CN202051548U un appareil du type précité dans lequel le boîtier motorisé supérieur est verrouillé par rotation sur le récipient de travail pour former une enceinte de travail. Cet appareil est un appareil à lait de soja. Un tel appareil comporte un dispositif de chauffe. Toutefois ce document ne décrit pas de dispositif d'évacuation en cas de surpression à l'intérieur de l'enceinte de travail.

Un objet de la présente invention est de proposer un appareil électroménager de préparation culinaire chauffant comportant une enceinte de travail, qui présente une construction simple et fiable permettant d'éviter les surpressions à l'intérieur de l'enceinte de travail.

Cet objet est atteint avec un appareil électroménager de préparation culinaire chauffant comportant un récipient de travail, une partie supérieure verrouillée par rotation sur le récipient de travail en deux points de verrouillage opposés, un dispositif de chauffe électrique pour chauffer les aliments contenus dans le récipient de travail, une enceinte de travail étant définie par le récipient de travail et la partie supérieure, du fait que l'un des points de verrouillage est déformable, de préférence élastiquement, en cas de surpression dans l'enceinte de travail exerçant une pression sous la partie supérieure, pour permettre le soulèvement de la partie supérieure par rapport au récipient de travail et créer une fuite hors de l'enceinte de travail.

Le point de verrouillage déformable permet un léger déplacement de la partie supérieure par rapport au récipient de travail. La partie supérieure est retenue sur le récipient de travail par l'autre point de verrouillage. La partie supérieure peut ainsi pivoter par rapport au récipient de travail pour ménager une fuite hors de l'enceinte de travail. Une telle construction permet de réaliser de manière simple et efficace une fuite hors de l'enceinte de travail en cas de montée en pression dans l'enceinte de travail.

Avantageusement, la partie supérieure comporte une patte de verrouillage, le récipient de travail comporte une patte de maintien, la patte de verrouillage vient en prise sous la patte de maintien lorsque la partie supérieure est verrouillée sur le récipient de travail, et la patte de maintien et/ou la patte de verrouillage est/sont déformable(s), de préférence élastiquement.

La raideur de l'élément déformable ou les raideurs des éléments déformables (formés par la patte de maintien et/ou par la patte de verrouillage), dans les directions conduisant à un soulèvement de la partie supérieure par rapport au récipient de travail, permet(tent) de définir le niveau de surpression à partir duquel la fuite est créée.

Avantageusement, le récipient de travail comporte un réceptacle définissant une partie de l'enceinte de travail, et la patte de maintien est montée à l'extérieur du réceptacle.

Cette disposition permet d'agencer le dispositif de verrouillage de l'enceinte de travail à l'extérieur de l'enceinte de travail.

Avantageusement encore, le récipient de travail comporte une poignée, et la poignée porte la patte de maintien.

Cette disposition permet de simplifier la construction du récipient de travail.

Avantageusement alors, la poignée comporte un corps de poignée, et la patte de maintien est vissée sur le corps de poignée.

Cette disposition permet de simplifier l'assemblage de la patte de maintien.

Avantageusement alors, la poignée comporte un enjoliveur clipsé sur le corps de poignée, et la patte de maintien est montée entre l'enjoliveur et le corps de poignée.

Cette disposition permet de simplifier la construction du récipient de travail.

Avantageusement alors, l'enjoliveur présente une forme en C.

Cette disposition permet de simplifier l'assemblage de l'enjoliveur.

Avantageusement encore, la patte de maintien est déformable, de préférence élastiquement, et la déformation de la patte de maintien sous l'action de la patte de verrouillage soulevée par la pression régnant à l'intérieur de l'enceinte de travail déclipse l'enjoliveur du corps de poignée.

Cette disposition permet de signaler à l'utilisateur l'utilisation du dispositif de sécurité à la surpression.

Selon un mode de réalisation avantageux, la partie supérieure comporte un boîtier motorisé supérieur, l'appareil comporte un accessoire de travail rotatif disposé dans le récipient de travail, et le boîtier motorisé supérieur est disposé sur le récipient de travail pour entraîner en rotation l'accessoire de travail rotatif selon un axe de rotation.

Le boîtier motorisé supérieur ne comporte alors pas nécessairement la patte de verrouillage.

Avantageusement alors, le boîtier motorisé supérieur comporte la patte de verrouillage, et la patte de verrouillage est plus rigide que la patte de maintien dans la direction correspondant à un soulèvement du boîtier motorisé supérieur par rapport au récipient de travail.

Ainsi la patte de verrouillage peut être visible, alors que la patte de maintien peut être logée dans un logement de verrouillage.

Avantageusement encore, le récipient de travail présente un fond et comporte un organe de centrage s'élevant à partir du fond, et l'accessoire de travail rotatif est monté sur l'organe de centrage.

Avantageusement encore, la partie supérieure comprend un joint annulaire venant en appui périphérique à l'intérieur du récipient de travail.

Cette disposition permet de mieux confiner les préparations liquides à l'intérieur de l'enceinte de travail.

Avantageusement encore, la partie supérieure comporte un couvercle intermédiaire, le récipient de travail porte le couvercle intermédiaire, l'enceinte de travail est définie par le récipient de travail et le couvercle intermédiaire.

Si désiré, le couvercle intermédiaire peut comporter la patte de verrouillage.

Avantageusement alors, le couvercle intermédiaire présente un conduit d'évacuation mettant en communication l'enceinte de travail avec l'extérieur de l'appareil.

Cette disposition permet de mieux contrôler l'évacuation des vapeurs hors de l'enceinte de travail.

Avantageusement alors, le conduit d'évacuation comporte une admission communiquant avec l'enceinte de travail et une évacuation communiquant avec l'extérieur de l'appareil, le couvercle intermédiaire comprend le joint annulaire, et l'évacuation débouche au dessus du joint annulaire.

Avantageusement encore, l'appareil électroménager de préparation culinaire chauffant comporte une base recevant le récipient de travail.

Avantageusement alors, le dispositif de chauffe électrique est porté par le récipient de travail, et la base comporte un connecteur électrique de chauffe pour alimenter électriquement le dispositif de chauffe électrique lorsque le récipient de travail est disposé sur la base. En alternative, le dispositif de chauffe électrique pourrait notamment être porté par la base.

Avantageusement alors, la base comporte un montant, et le boîtier motorisé supérieur est verrouillé avec le montant par rotation autour de l'axe de rotation (58).

Avantageusement alors, le montant présente un connecteur électrique de motorisation pour alimenter électriquement le boîtier motorisé supérieur.

Avantageusement encore, le boîtier motorisé supérieur est verrouillé par rotation autour de l'axe de rotation, et le boîtier motorisé supérieur est verrouillé de manière opposée par rapport à l'axe de rotation d'une part avec le montant et d'autre part avec le récipient de travail.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un appareil électroménager de préparation culinaire selon l'invention,
- la figure 2 est une vue en coupe verticale de l'appareil électroménager de préparation culinaire illustré sur la figure 1, dans une configuration de rangement,
- la figure 3 est une vue en coupe verticale de l'appareil électroménager de préparation culinaire illustré sur la figure 1, dans une configuration d'utilisation, la base n'étant pas représentée,
- la figure 4 est une vue en élévation de l'appareil électroménager de préparation culinaire illustré sur la figure 1, dans une configuration assemblée,
- les figures 5 et 6 sont deux vues en perspective de côté et de dessus de la base de l'appareil électroménager de préparation culinaire illustré sur la figure 1,
- les figures 7 et 8 sont deux vues en perspective de côté et de dessous du récipient de travail de l'appareil électroménager de préparation culinaire illustré sur la figure 1,
- les figures 9 à 13 sont des vues en perspective de dessus, de dessous et de côté du couvercle intermédiaire de l'appareil électroménager de préparation culinaire illustré sur la figure 1,
- la figure 14 est une vue de dessus du récipient de travail illustré sur les figures 7 et 8 portant le couvercle intermédiaire illustré sur les figures 9 à 13,
- la figure 15 est une vue partielle en élévation et en coupe du récipient de travail illustré sur les figures 7 et 8 portant le couvercle intermédiaire illustré sur les figures 9 à 13, selon une première orientation,
- la figure 16 est une vue en élévation et en coupe du récipient de travail illustré sur les figures 7 et 8 portant le couvercle intermédiaire illustré sur les figures 9 à 13, selon une deuxième orientation,
- les figures 17 et 18 sont des vues en perspective de dessous et de dessus du boîtier motorisé supérieur de l'appareil électroménager de préparation culinaire illustré sur la figure 1,
- la figure 19 est une vue en éclaté du récipient de travail illustré sur les figures 7 et 8,
- la figure 20 est une vue en perspective d'une partie du récipient de travail illustré sur les figures 7, 8 et 19, comportant un enjoliveur,
- la figure 21 est une vue en perspective de la partie du récipient de travail illustrée sur la figure 20, dans laquelle l'enjoliveur a été enlevé,
- la figure 22 est une vue en perspective de l'enjoliveur du récipient de travail illustré sur les figures 7, 8, 20 et 21.

L'appareil électroménager de préparation culinaire selon l'invention comprend un récipient de travail 2 ainsi qu'une partie supérieure 7 verrouillée par rotation sur le récipient de travail 2.

L'appareil électroménager de préparation culinaire selon l'invention comprend une enceinte de travail 8 définie par le récipient de travail 2 et la partie supérieure 7. Avantageusement la partie supérieure 7 comprend un joint annulaire 9 venant en appui périphérique à l'intérieur du récipient de travail 2.

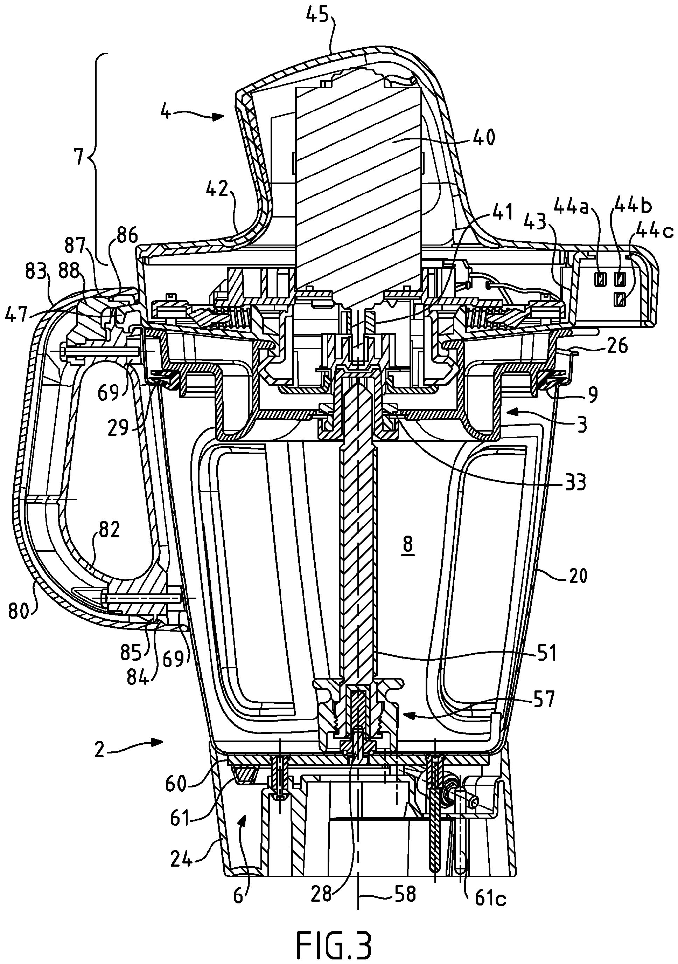

Dans l'exemple de réalisation illustré sur les figures, la partie supérieure 7 comporte une patte de verrouillage 47, et le récipient de travail 2 comporte une patte de maintien 88. La patte de maintien 88 est déformable, de préférence élastiquement déformable. Tel que visible sur la figure 3, la patte de verrouillage 47 vient en prise sous la patte de maintien 88 lorsque la partie supérieure 7 est verrouillée sur le récipient de travail 2.

Dans l'exemple de réalisation illustré sur les figures, la partie supérieure 7 comporte un boîtier motorisé supérieur 4. Le boîtier motorisé supérieur 4 comporte la patte de verrouillage 47, tel que bien visible sur la figure 3. La patte de verrouillage 47 est plus rigide que la patte de maintien 88 dans la direction correspondant à un soulèvement du boîtier motorisé supérieur 4 par rapport au récipient de travail 2.

Selon une forme de réalisation préférée, la partie supérieure 7 comporte un couvercle intermédiaire 3. L'enceinte de travail 8 est définie par le récipient de travail 2 et le couvercle intermédiaire 3. Le couvercle intermédiaire 3 comprend le joint annulaire 9.

L'appareil électroménager de préparation culinaire illustré sur les figures comporte une base 1, le récipient de travail 2, le couvercle intermédiaire 3, le boîtier motorisé supérieur 4, ainsi que des accessoires de préparation 5.

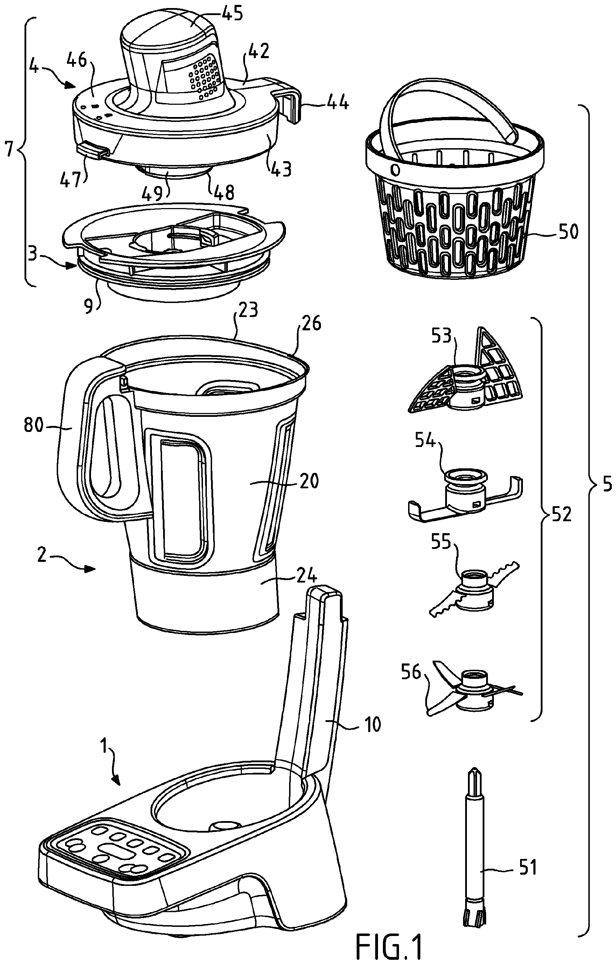

Tel que représenté sur la figure 1, les accessoires de préparation 5 comprennent un panier vapeur 50, un moyeu 51, et des outils de travail rotatifs 52 interchangeables. Les outils de travail rotatifs 52 comprennent un outil émulsionneur 53, un outil de mélange 54, un outil couteau denté 55 et un outil couteau coupant 56.

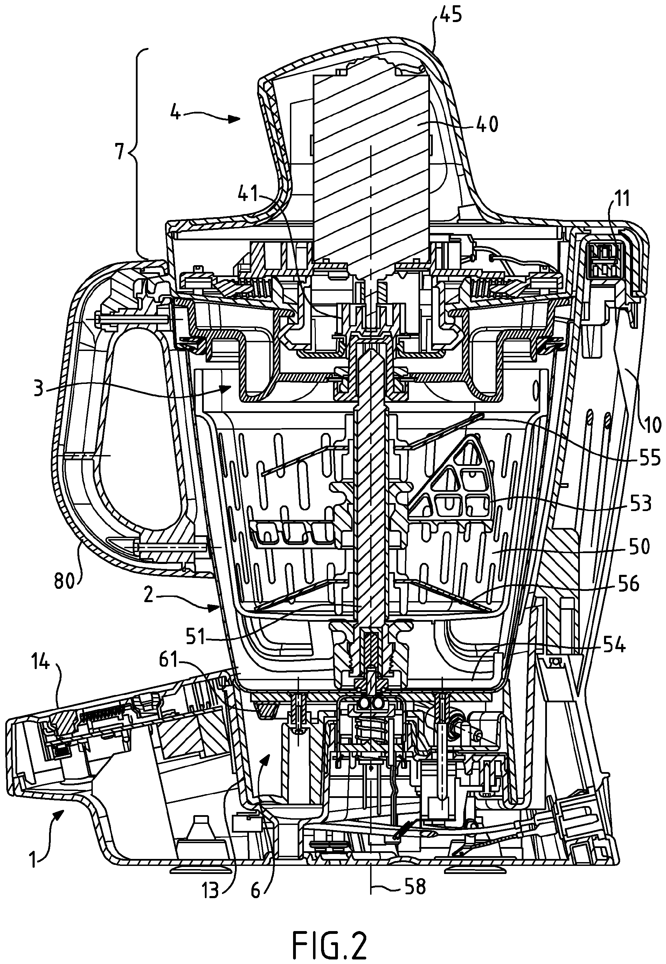

Les accessoires de préparation 5 peuvent être rangés dans le récipient de travail 2, tel que montré sur la figure 2.

En configuration d'utilisation, l'appareil électroménager de préparation culinaire comporte un accessoire de travail rotatif 57 disposé dans le récipient de travail 2, tel que montré sur la figure 3. Le boîtier motorisé supérieur 4 est disposé sur le récipient de travail 2 pour entraîner en rotation l'accessoire de travail rotatif 57 selon un axe de rotation 58.

Dans l'exemple de réalisation illustré sur les figures, chacun des outils de travail rotatifs 52 peut être monté sur le moyeu 51 pour former l'accessoire de travail rotatif 57.

Le récipient de travail 2 présente un fond 25. Le récipient de travail 2 comporte un organe de centrage 28 s'élevant à partir du fond 25. Tel que visible sur la figure 3, l'accessoire de travail rotatif 57 est monté sur l'organe de centrage 28.

Le récipient de travail 2 porte le couvercle intermédiaire 3.

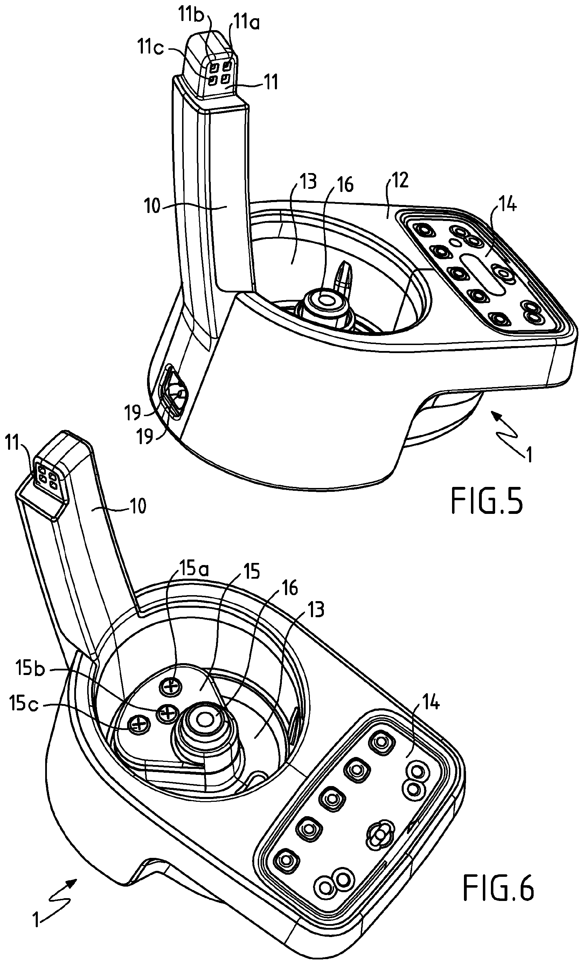

La base 1 comporte un montant 10, mieux visible sur les figures 5 et 6. Le montant 10 présente un connecteur électrique de motorisation 11 pour alimenter le boîtier motorisé supérieur 4. Le connecteur électrique de motorisation 11 est agencé latéralement dans le montant 10. Le connecteur électrique de motorisation 11 comporte trois douilles latérales 11a, 11b, 11c disposées dans une paroi latérale de la partie supérieure du montant 10. Les douilles latérales 11a, 11b, 11c présentent une entrée latérale agencée tangentiellement par rapport à l'axe de rotation 58.

La base 1 forme un socle 12 recevant le récipient de travail 2. A cet effet la base 1 présente une empreinte 13 ménagée dans le socle 12 pour recevoir la partie inférieure du récipient de travail 2. La base 1 présente un tableau de commande 14 disposé sur le socle 12. La partie supérieure du socle 12 est relevée en direction du montant 10. La partie supérieure du socle 12 est plane et entoure l'empreinte 13. Le montant 10 est agencé à l'opposé du tableau de commande 14 par rapport à l'empreinte 13.

L'appareil électroménager de préparation culinaire selon l'invention comporte un dispositif de chauffe électrique 6 pour chauffer les aliments contenus dans le récipient de travail 2.

Dans l'exemple de réalisation illustré sur les figures, le dispositif de chauffe électrique 6 est porté par le récipient de travail 2. Le récipient de travail 2 est monté amovible sur la base 1. A cet effet, la base 1 comporte un connecteur électrique de chauffe 15, mieux visible sur la figure 6, pour alimenter le dispositif de chauffe électrique 6 lorsque le récipient de travail 2 est disposé sur la base 1. Le connecteur électrique de chauffe 15 comporte trois douilles supérieures 15a, 15b, 15c disposées dans l'empreinte 13. Les douilles supérieures 15a, 15b, 15c présentent une entrée supérieure agencée parallèlement à l'axe de rotation 58.

La base 1 comporte également un dispositif de contrôle de température comportant un capteur 16 prévu pour venir en contact avec le récipient de travail 2 disposé sur la base 1. Plus particulièrement dans l'exemple de réalisation illustré sur les figures, le capteur 16 est agencé dans l'empreinte 13. La base 1 présente des broches d'alimentation 19, visibles sur la figure 5, prévues pour recevoir un cordon d'alimentation électrique, non représenté.

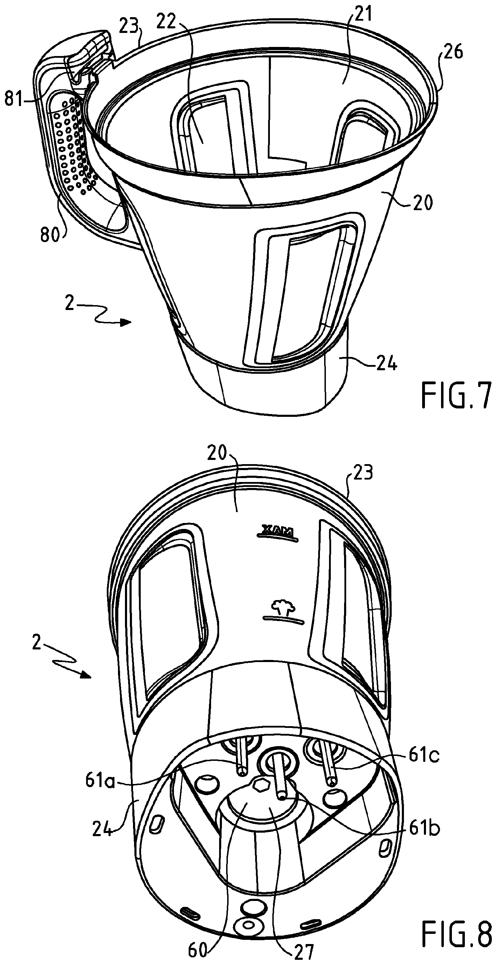

Le récipient de travail 2 illustré sur les figures 7 et 8 comporte un réceptacle 20 présentant une paroi latérale intérieure 21. Le réceptacle 20 est avantageusement réalisé en métal, de préférence en acier inoxydable. La paroi latérale intérieure 21 comporte des nervures internes 22. Le récipient de travail 2 présente un bord supérieur 23. Le bord supérieur 23 du récipient de travail 2 présente un décrochement supérieur 26, mieux visible sur la figure 3. Le récipient de travail 2 comporte une poignée 80. La poignée 80 est montée sur le réceptacle 20. Le décrochement supérieur 26 est agencé à l'opposé de la poignée 80.

Le récipient de travail 2 comporte une plaque de diffusion thermique 60 agencée sous le réceptacle 20. La plaque de diffusion thermique 60 est avantageusement réalisée en aluminium. Le récipient de travail 2 comporte une embase 24 prévue pour reposer sur la base 1. L'embase 24 est montée sous le réceptacle 20. Tel que représenté sur la figure 2, l'embase 24 est engagée dans l'empreinte 13 lorsque le récipient de travail 2 est en place sur la base 1. La paroi latérale intérieure 21 présente un décrochement annulaire 29.

Dans l'exemple de réalisation illustré sur les figures, le dispositif de chauffe électrique 6 est formé par un élément chauffant blindé 61 fixé sous la plaque de diffusion thermique 60. La plaque de diffusion thermique 60 est agencée sous le réceptacle 20. Tel que visible sur la figure 8, trois broches inférieures 61a, 61b, 61c sont issues de l'embase 24. Deux des broches inférieures 61a, 61b, 61c sont reliées aux bornes de l'élément chauffant blindé 61 et la troisième formant la terre est reliée au réceptacle 20 et/ou à la plaque de diffusion thermique 60.

Tel que visible sur les figures 3 et 8, l'embase 24 présente une ouverture 27 laissant apparaître le fond 25. L'ouverture 27 est prévue pour le passage du capteur 16. Tel que visible sur la figure 2, le capteur 16 vient en contact avec le fond 25 du récipient de travail 2. Le capteur 16 est agencé en position centrale par rapport au fond 25 du récipient de travail 2. L'axe de rotation 58 passe par le capteur 16.

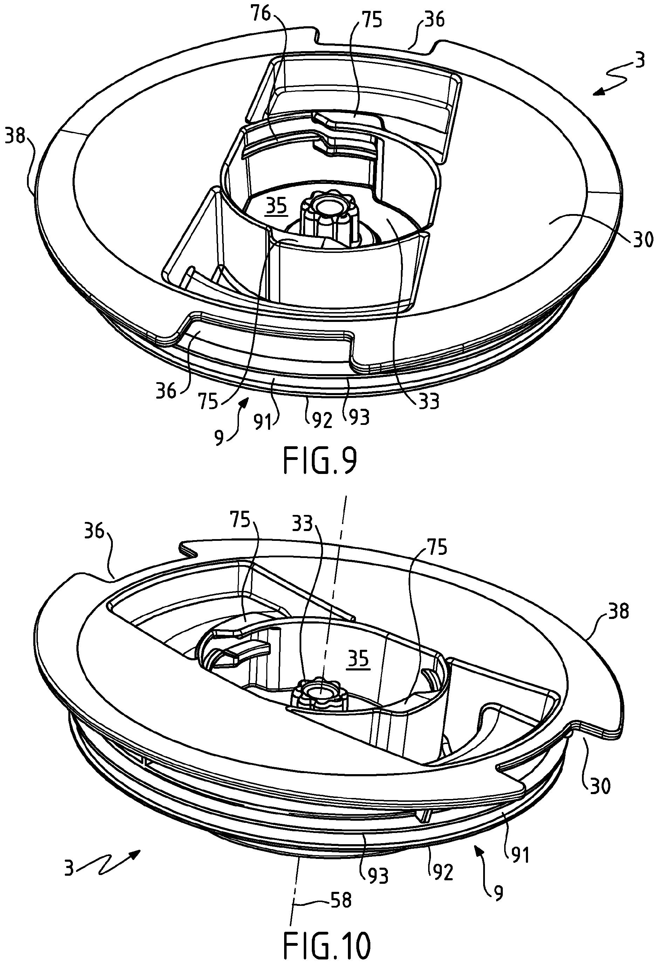

Le couvercle intermédiaire 3 comporte un corps 30 s'étendant autour de l'axe de rotation 58, tel que représenté sur les figures 9 et 10. Le corps 30 présente un logement central 35 s'étendant autour de l'axe de rotation 58. Le logement central 35 présente deux collerettes internes 75 prévues pour un verrouillage par baïonnette avec le boîtier motorisé supérieur 4. Le couvercle intermédiaire 3 présente deux organes de retenue 76 agencés dans le logement central 35. Les organes de retenue 76 et les collerettes internes 75 sont agencés de manière opposée. Les organes de retenue 76 sont décalés axialement et latéralement par rapport aux collerettes internes 75.

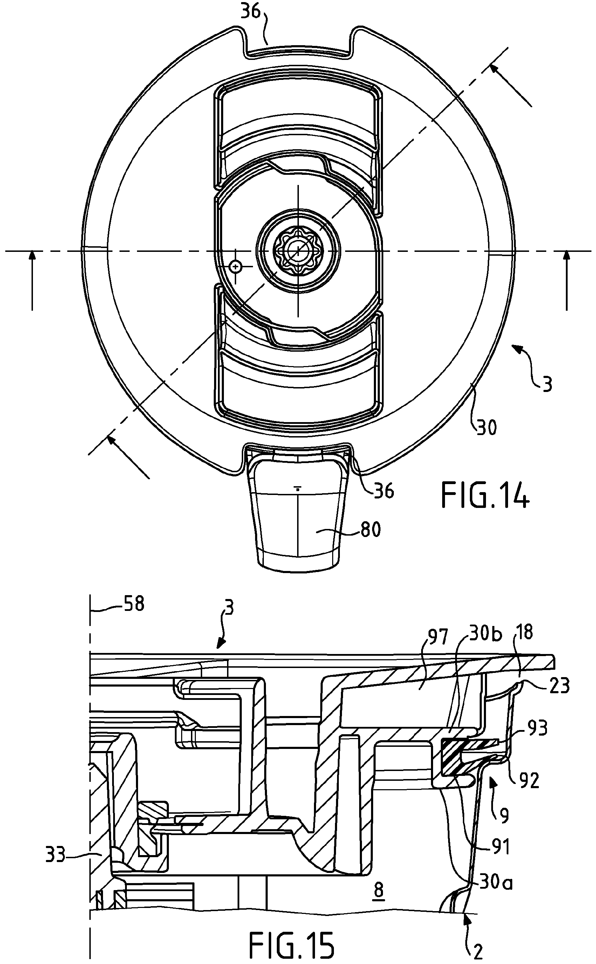

Le couvercle intermédiaire 3 est bloqué en rotation par rapport au récipient de travail 2. A cet effet le corps 30 présente deux échancrures périphériques 36. L'une des échancrures périphériques 36 reçoit la poignée 80, tel que montré sur la figure 14, et l'autre reçoit le montant 10. De préférence chacune des échancrures périphériques 36 est prévue pour recevoir indifféremment la poignée 80 ou le montant 10.

Le couvercle intermédiaire 3 comporte une bordure extérieure 38 présentant une partie inférieure 39 apparente lorsque le boîtier motorisé supérieur 4 est disposé sur le couvercle intermédiaire 3.

Selon une forme de réalisation préférée, le couvercle intermédiaire 3 porte un organe de transmission rotatif 33. Tel que montré sur la figure 3, l'organe de transmission rotatif 33 est entrainé en rotation par le boîtier motorisé supérieur 4 et entraîne en rotation l'accessoire de travail rotatif 57 disposé dans le récipient de travail 2. Le logement central 35 entoure l'organe de transmission rotatif 33. A titre de variante, le boîtier motorisé supérieur 4 pourrait directement entraîner en rotation l'accessoire de travail rotatif 57, le couvercle intermédiaire 3 présentant alors un passage axial libre.

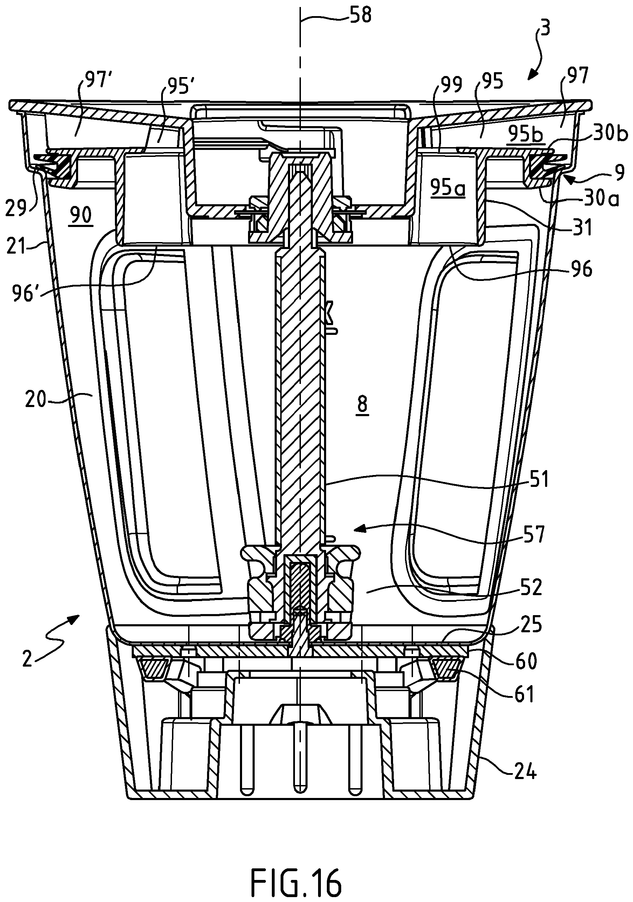

Le couvercle intermédiaire 3 présente un conduit d'évacuation 95 mettant en communication l'enceinte de travail 8 avec l'extérieur de l'appareil, tel que visible sur la figure 16. Le couvercle intermédiaire 3 ménage un espace annulaire 90 avec la paroi latérale intérieure 21 du récipient de travail 2.

Le couvercle intermédiaire 3 présente une paroi latérale déflectrice 31 s'étendant à distance de la paroi latérale intérieure 21 du récipient de travail 2, tel que visible sur la figure 3. La paroi latérale déflectrice 31 s'étend autour de l'axe de rotation 58.

Plus particulièrement, le conduit d'évacuation 95 comporte une admission 96 communiquant avec l'enceinte de travail 8 et une évacuation 97 communiquant avec l'extérieur de l'appareil.

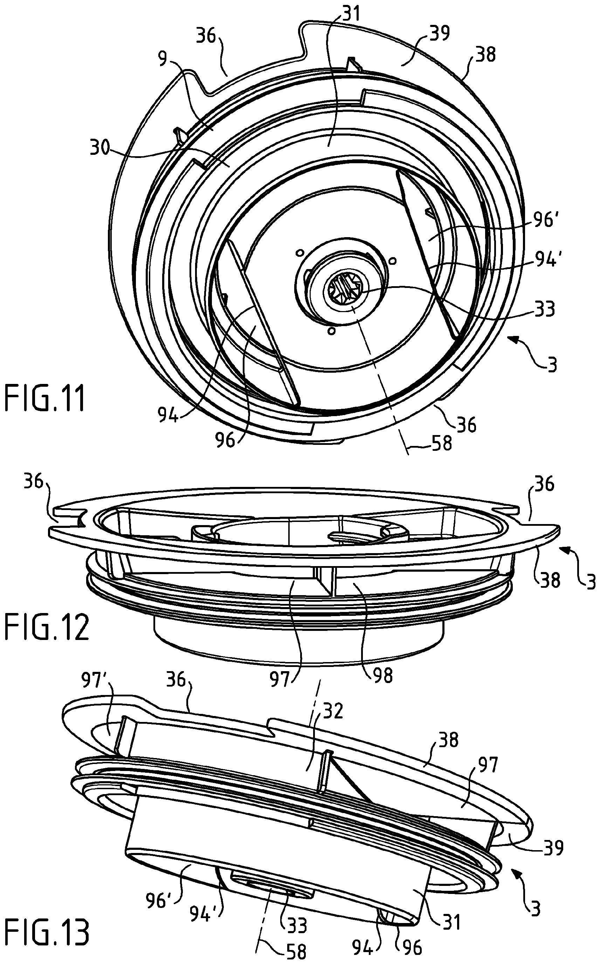

L'admission 96 est agencée entre la paroi latérale déflectrice 31 et l'axe de rotation 58. L'admission 96 présente une échancrure latérale 94 agencée entre la paroi latérale déflectrice 31 et l'axe de rotation 58. Tel que bien visible sur la figure 11, l'admission 96 est agencée entre la paroi latérale déflectrice 31 et l'axe de rotation 58.

L'évacuation 97 débouche dans une paroi latérale extérieure 32 du couvercle intermédiaire 3 hors de l'enceinte de travail 8, tel que montré sur la figure 13. L'évacuation 97 débouche sous la bordure extérieure 38, tel que montré sur la figure 12. L'évacuation 97 s'étend sur plus du quart de la périphérie du couvercle intermédiaire 3. Pour une meilleure rigidité du couvercle intermédiaire 3 le conduit d'évacuation 95 peut être pourvu d'au moins une nervure interne 98.

Tel que montré sur la figure 15, l'évacuation 97 du conduit d'évacuation 95 débouche en regard de la paroi latérale intérieure 21 du récipient de travail 2 à distance d'un échappement 18 vers l'extérieur de l'appareil.

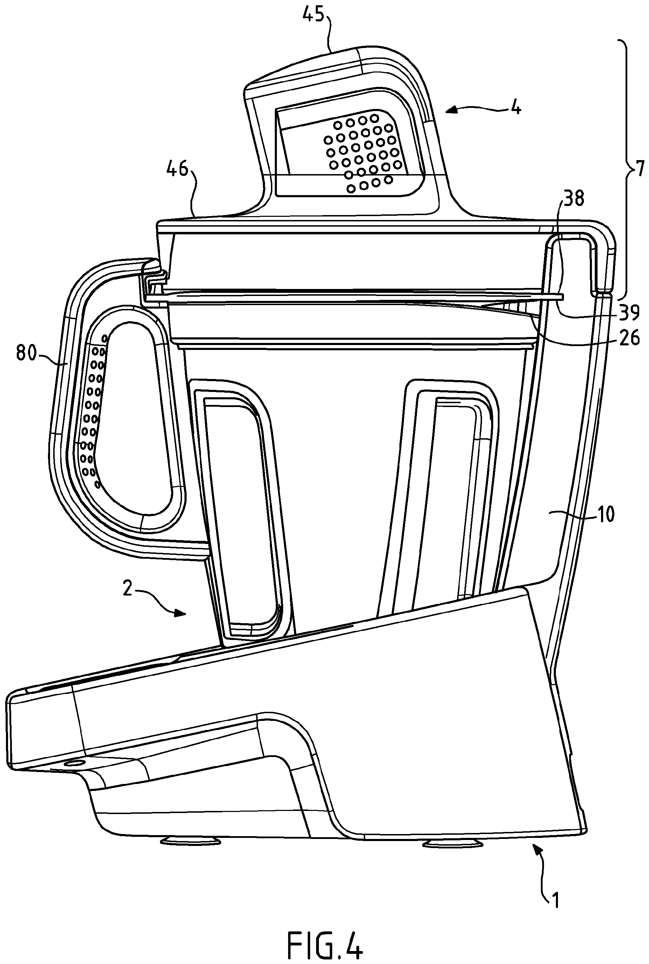

Plus particulièrement, le décrochement supérieur 26 du bord supérieur 23 du récipient de travail 2 ménage l'échappement 18. Tel que visible sur les figures 3 et 4, Le décrochement supérieur 26 est adjacent au montant 10. Le décrochement supérieur 26 s'étend de part et d'autre du montant. L'échappement 18 est ménagé entre le récipient de travail 2 et le couvercle intermédiaire 3.

Tel que visible sur les figures 16 et 15, le conduit d'évacuation 95 présente une première portion 95a principalement verticale prolongeant l'admission 96 et une deuxième portion 95b principalement horizontale conduisant à l'évacuation 97. La première portion 95a communique avec la deuxième portion 95b par un passage 99.

Le joint annulaire 9 est monté autour du corps 30 entre une bordure d'appui inférieure 30a et une bordure d'appui supérieure 30b. L'évacuation 97 du conduit d'évacuation 95 débouche au dessus du joint annulaire 9.

Le joint annulaire 9 comporte une couronne 91 montée entre la bordure d'appui inférieure 30a et la bordure d'appui supérieure 30b. Le joint annulaire 9 comporte une lèvre annulaire 92. Ainsi le joint annulaire 9 est un joint à lèvre. La lèvre annulaire 92 est issue de la couronne 91. Selon une forme de réalisation préférée, le joint annulaire 9 comporte une autre lèvre annulaire 93. L'autre lèvre annulaire 93 est issue de la couronne 91. L'autre lèvre annulaire 93 s'étend au dessus de la lèvre annulaire 92. Ainsi la lèvre annulaire 92 et l'autre lèvre annulaire 93 sont superposées.

Tel que visible sur la figure 3, le joint annulaire 9 vient en appui sur le décrochement annulaire 29 du récipient de travail 2. Plus particulièrement, la lèvre annulaire 92 vient en appui sur le décrochement annulaire 29.

Le couvercle intermédiaire 3 présente un autre conduit d'évacuation 95' mettant en communication l'enceinte de travail 8 avec l'extérieur de l'appareil.

L'autre conduit d'évacuation 95' comporte une autre admission 96' communiquant avec l'enceinte de travail 8 et une autre évacuation 97' communiquant avec l'extérieur de l'appareil.

L'autre admission 96' est agencée entre la paroi latérale déflectrice 31 et l'axe de rotation 58. L'axe de rotation 58 est agencé entre l'admission 96 et l'autre admission 96'. L'autre admission 96' présente une autre échancrure latérale 94' agencée entre la paroi latérale déflectrice 31 et l'axe de rotation 58. L'autre évacuation 97' débouche dans la paroi latérale extérieure 32. L'autre évacuation 97' débouche au dessus du joint annulaire 9. L'autre évacuation 97' débouche sous la bordure extérieure 38. Les échancrures périphériques 36 sont agencées entre l'évacuation 97 et l'autre évacuation 97'.

Le boîtier motorisé supérieur 4 loge un moteur électrique 40 entraînant un réducteur 41 prévu pour entraîner l'accessoire de travail rotatif 57 par l'intermédiaire de l'organe de transmission rotatif 33 du couvercle intermédiaire 3, tel que visible sur la figure 3. Le boîtier motorisé supérieur 4 comporte un capot supérieur 42 assemblé avec un capot inférieur 43. Le capot supérieur 42 forme un pommeau 45 prévu pour la préhension du boîtier motorisé supérieur 4. Tel que visible sur les figures 2 et 3, le moteur électrique 40 s'étend partiellement à l'intérieur du pommeau 45. Le pommeau 45 s'élève au dessus d'une partie circonférentielle 46 du boîtier motorisé supérieur 4, tel que visible sur les figures 1 à 4. Le capot inférieur 43 présente une partie centrale inférieure 48 proéminente.

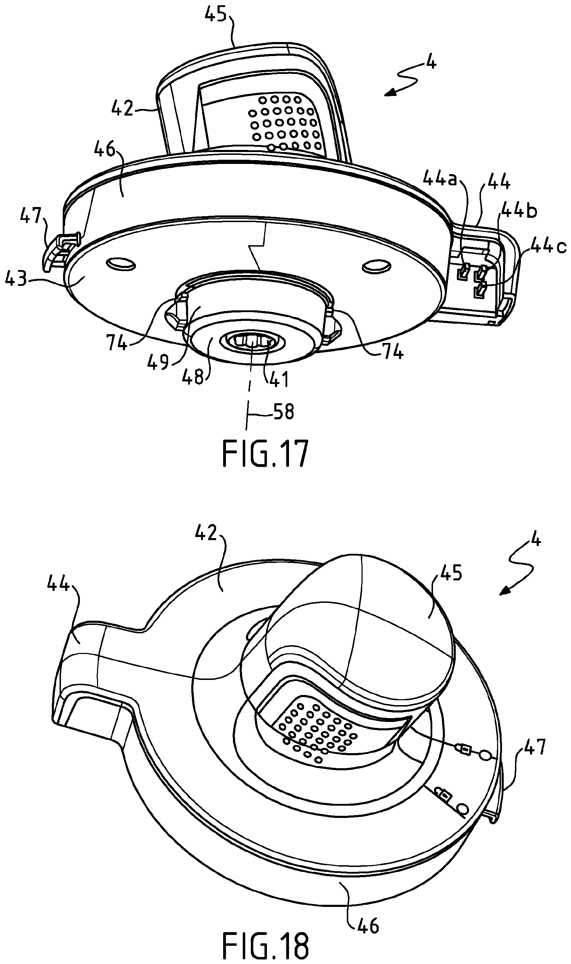

Tel que visible sur la figure 17, le boîtier motorisé supérieur 4 comporte trois broches latérales 44a, 44b, 44c logées en périphérie de la partie circonférentielle 46 du boîtier motorisé supérieur 4. Deux des broches latérales 44a, 44b, 44c sont prévues pour alimenter électriquement le moteur électrique 40, la troisième étant prévue pour mettre à la terre le moteur électrique 40. Les broches latérales 44a, 44b, 44c s'étendent transversalement sous un prolongement 44 du capot supérieur 42. Ainsi les broches latérales 44a, 44b, 44c sont agencées tangentiellement par rapport à l'ouverture supérieure du récipient de travail 2. Les broches latérales 44a, 44b, 44c s'étendent transversalement par rapport à l'axe de rotation 58. Deux des broches latérales 44a, 44b, 44c sont agencées à une distance identique de l'axe de rotation 58 mais à des niveaux différents, la troisième étant agencée au même niveau que la broche latérale la plus élevée, mais en étant plus proche de l'axe de rotation 58. Le prolongement 44 forme une corne et ménage une ouverture latérale et inférieure prévue pour le passage du connecteur électrique de motorisation 11 du montant 10.

Le boîtier motorisé supérieur 4 disposé sur le récipient de travail 2 peut être tourné sur le récipient de travail 2 pour amener le connecteur électrique de motorisation 11 en prise avec les broches latérales 44a, 44b, 44c du boîtier motorisé supérieur 4 et alimenter électriquement le boîtier motorisé supérieur 4.

La patte de verrouillage 47 est agencée en périphérie de la partie circonférentielle 46 du boîtier motorisé supérieur 4. Plus particulièrement, la patte de verrouillage 47 est agencée à l'opposé du prolongement 44, tel que bien visible sur la figure 18.

Le boîtier motorisé supérieur 4 est verrouillé par baïonnette avec le couvercle intermédiaire 3 et peut occuper par rotation sur le couvercle intermédiaire 3 successivement une position déverrouillée et une position verrouillée. A cet effet le boîtier motorisé supérieur 4 présente des ergots extérieurs 74 prévus pour être engagés sous les collerettes internes 75 du couvercle intermédiaire 3. Les ergots extérieurs 74 sont agencées sur une paroi latérale 49 de la partie centrale inférieure 48 du boîtier motorisé supérieur 4.

Le boîtier motorisé supérieur 4 est verrouillé avec le montant 10 par rotation autour de l'axe de rotation 58. Le boîtier motorisé supérieur 4 est verrouillé avec le récipient de travail 2 par rotation autour de l'axe de rotation 58. A cet effet la patte de verrouillage 47 du boîtier motorisé supérieur 4 est engagée dans un logement de verrouillage 81 du récipient de travail 2. Plus particulièrement, le boîtier motorisé supérieur 4 est verrouillé avec la poignée 80 par rotation autour de l'axe de rotation 58. Le logement de verrouillage 81 est agencé dans la partie supérieure de la poignée 80. Le logement de verrouillage 81 présente une entrée latérale, tel que visible sur la figure 3. Le boîtier motorisé supérieur 4 est verrouillé de manière opposée d'une part avec le montant 10 et d'autre part avec le récipient de travail 2, par rotation autour de l'axe de rotation 58.

Tel que visible sur la figure 3, le réceptacle 20 définit une partie de l'enceinte de travail 8. La patte de maintien 88 est montée à l'extérieur du réceptacle 20. Plus particulièrement dans l'exemple de réalisation illustré sur les figures, la poignée 80 porte la patte de maintien 88.

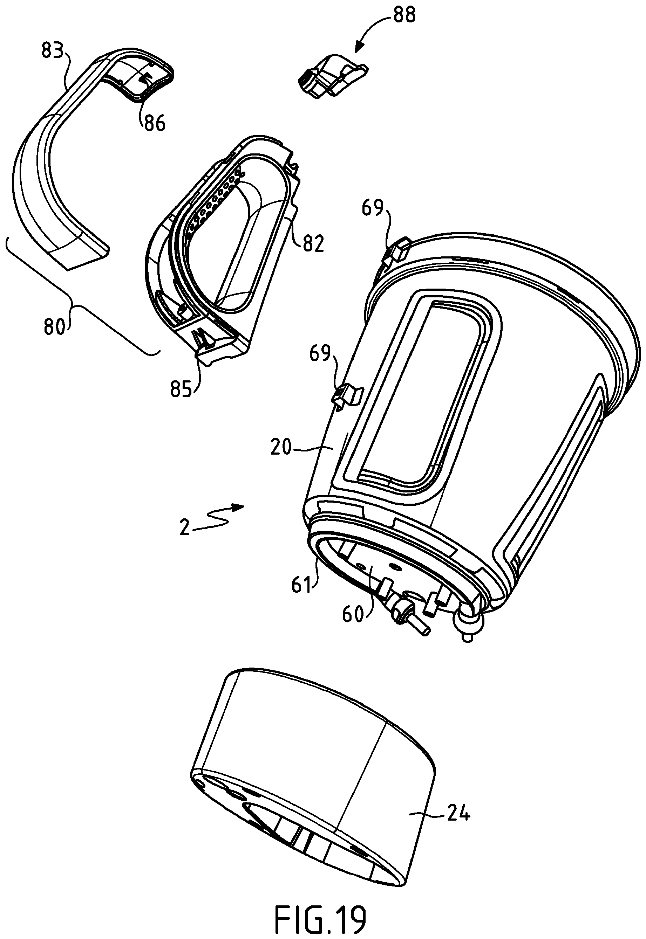

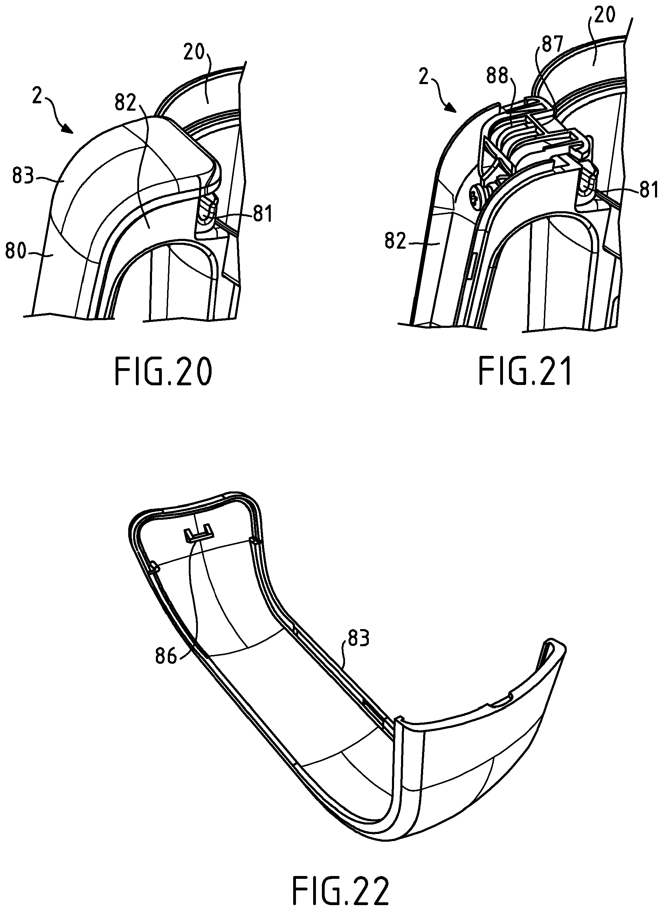

Tel que mieux visible sur les figures 19 à 22, la poignée 80 comporte un corps de poignée 82 et un enjoliveur 83. Le corps de poignée 82 est vissé sur deux brides 69 fixées au réceptacle 20, tel que visible sur la figure 3. La patte de maintien 88 est vissée sur le corps de poignée 82 en utilisant la vis supérieure vissée sur la bride 69 supérieure. La patte de maintien 88 est montée entre l'enjoliveur 83 et le corps de poignée 82. L'enjoliveur 83 est clipsé sur le corps de poignée 82. A cet effet l'enjoliveur 83 présente une forme en C et comporte un ergot inférieur 84 venant en prise avec une butée inférieure 85 du corps de poignée 82 et un ergot supérieur 86 venant en prise avec la patte de maintien 88 lorsque l'enjoliveur 83 est monté sur le corps de poignée 82. A cet effet la patte de maintien 88 présente une butée supérieure 87, mieux visible sur la figure 22.

L'appareil électroménager de préparation culinaire illustré sur les figures s'utilise et fonctionne de la manière suivante.

L'utilisateur dispose les aliments dans le récipient de travail 2, met en place la partie supérieure 7 sur le récipient de travail 2, tourne la partie supérieure 7 par rapport au récipient de travail 2 pour amener la patte de verrouillage 47 venant en prise sous la patte de maintien 88, et met en marche l'appareil, notamment le dispositif de chauffe électrique 6.

Une pression excessive, ou surpression, peut intervenir à l'intérieur de l'enceinte de travail 8, notamment si des aliments bouchent le conduit d'évacuation 95 et l'autre conduit d'évacuation 95'. En cas de surpression à l'intérieur de l'enceinte de travail 8, la pression de vapeur régnant dans l'enceinte de travail 8 peut alors soulever la partie supérieure 7, par l'intermédiaire du couvercle intermédiaire 3. Le boîtier motorisé supérieur 4 verrouillé avec le montant 10 réalise un ancrage de la partie supérieure 7. La déformabilité de la patte de maintien 88 va autoriser le soulèvement de la partie supérieure 7, en l'occurrence le boîtier motorisé supérieur 4 sous lequel est verrouillé le couvercle intermédiaire 3. La patte de verrouillage 47 déforme ainsi la patte de maintien 88, de préférence élastiquement, pour créer une fuite entre le récipient de travail 2 et la partie supérieure 7, en cas de surpression dans l'enceinte de travail 8 soulevant la partie supérieure 7. La fuite est par exemple créée entre le joint annulaire 9 et le récipient de travail 2. Une montée excessive en pression à l'intérieur de l'enceinte de travail 8 peut ainsi être évitée.

La déformation de la patte de maintien 88 peut de plus permettre de désengager l'ergot supérieur 86 de la butée supérieure 87. Ainsi l'enjoliveur 83 peut être déclipsé du corps de poignée 82 lorsque la patte de verrouillage 47 déforme la patte de maintien 88. Cette disposition permet d'avertir l'utilisateur d'une situation anormale.

A titre de variante, la patte de verrouillage 47 issue de la partie supérieure 7 pourrait être déformable, si désiré élastiquement, pour permettre un soulèvement de la partie supérieure 7 par rapport au récipient de travail 2. La patte de maintien 88 issue du récipient de travail 2 n'est alors pas nécessairement déformable sous l'action de la patte de verrouillage 47.

A titre de variante, l'appareil électroménager de préparation culinaire selon l'invention ne comporte pas nécessairement une base 1 alimentant électriquement un dispositif de chauffe électrique 6 porté par le récipient de travail 2. Le dispositif de chauffe électrique 6 peut notamment être porté par la base 1, pour chauffer le récipient de travail 2 disposé sur la base 1.

A titre de variante, l'appareil électroménager de préparation culinaire selon l'invention ne comporte pas nécessairement une base 1 alimentant électriquement le boîtier motorisé supérieur 4. Le boîtier motorisé supérieur 4 peut notamment comporter ou recevoir un cordon d'alimentation électrique.

A titre de variante, le boîtier motorisé supérieur 4 n'est pas nécessairement verrouillé par rotation avec le montant 10. Le boîtier motorisé supérieur 4 peut notamment être verrouillé par rotation avec le récipient de travail 2 en deux points de verrouillage opposés.

A titre de variante, la partie supérieure 7 ne comporte pas nécessairement un couvercle intermédiaire 3 agencé entre le boîtier motorisé supérieur 4 et le récipient de travail 2. L'enceinte de travail 8 peut notamment être définie par le boîtier motorisé supérieur 4 et le récipient de travail 2.

A titre de variante, la partie supérieure 7 ne comporte pas nécessairement un boîtier motorisé supérieur 4. Si désiré, le récipient de travail 2 peut notamment loger un accessoire de travail rotatif 57 entraîné au travers du fond du récipient de travail 2. La partie supérieure 7 peut alors former un couvercle verrouillé par rotation sur le récipient de travail 2 en deux points de verrouillage opposés. Si désiré, ledit couvercle est verrouillé avec le récipient de travail 2 en deux points de verrouillage opposés.

A titre de variante, l'appareil électroménager de préparation culinaire selon l'invention ne comporte pas nécessairement un dispositif d'entraînement en rotation entraînant en rotation un accessoire de travail rotatif 57 disposé dans le récipient de travail 2.

La présente invention n'est nullement limitée à l'exemple de réalisation décrit et à ses variantes, mais englobe de nombreuses modifications dans le cadre des revendications.

## Revendications

1. Appareil électroménager de préparation culinaire chauffant comportant un récipient de travail (2), une partie supérieure (7) verrouillée par rotation sur le récipient de travail (2) en deux points de verrouillage opposés, un dispositif de chauffe électrique (6) pour chauffer les aliments contenus dans le récipient de travail (2), une enceinte de travail (8) étant définie par le récipient de travail (2) et la partie supérieure (7), **caractérisé en ce que** l'un des points de verrouillage est déformable, de préférence élastiquement, en cas de surpression dans l'enceinte de travail (8) exerçant une pression sous la partie supérieure (7), pour permettre le soulèvement de la partie supérieure (7) par rapport au récipient de travail (2) et créer une fuite hors de l'enceinte de travail (8).

2. Appareil électroménager de préparation culinaire chauffant selon la revendication 1, **caractérisé en ce que** la partie supérieure (7) comporte une patte de verrouillage (47), **en ce que** le récipient de travail (2) comporte une patte de maintien (88), **en ce que** la patte de verrouillage (47) vient en prise sous la patte de maintien (88) lorsque la partie supérieure (7) est verrouillée sur le récipient de travail (2), et **en ce que** la patte de maintien (88) et/ou la patte de verrouillage (47) est/sont déformable(s), de préférence élastiquement.

3. Appareil électroménager de préparation culinaire chauffant selon la revendication 2, **caractérisé en ce que** le récipient de travail (2) comporte un réceptacle (20) définissant une partie de l'enceinte de travail (8), et **en ce que** la patte de maintien (88) est montée à l'extérieur du réceptacle (20).

4. Appareil électroménager de préparation culinaire chauffant selon l'une des revendications 2 ou 3, **caractérisé en ce que** le récipient de travail (2) comporte une poignée (80), et **en ce que** la poignée (80) porte la patte de maintien (88).

5. Appareil électroménager de préparation culinaire chauffant selon la revendication 4, **caractérisé en ce que** la poignée (80) comporte un corps de poignée (82), et **en ce que** la patte de maintien (88) est vissée sur le corps de poignée (82).

6. Appareil électroménager de préparation culinaire chauffant selon la revendication 5, **caractérisé en ce que** la poignée (80) comporte un enjoliveur (83) clipsé sur le corps de poignée (82) et **en ce que** la patte de maintien (88) est montée entre l'enjoliveur (83) et le corps de poignée (82).

7. Appareil électroménager de préparation culinaire chauffant selon la revendication 6, **caractérisé en ce que** l'enjoliveur (83) présente une forme en C.

8. Appareil électroménager de préparation culinaire chauffant selon l'une des revendications 6 ou 7, **caractérisé en ce que** la patte de maintien (88) est déformable, de préférence élastiquement, et **en ce que** la déformation de la patte de maintien (88) sous l'action de la patte de verrouillage (47) soulevée par la pression régnant à l'intérieur de l'enceinte de travail (8) déclipse l'enjoliveur (83) du corps de poignée (82).

9. Appareil électroménager de préparation culinaire chauffant selon l'une des revendications 1 à 8, **caractérisé en ce que** la partie supérieure (7) comporte un boîtier motorisé supérieur (4), **en ce que** l'appareil électroménager de préparation culinaire chauffant comporte un accessoire de travail rotatif (57) disposé dans le récipient de travail (2), et **en ce que** le boîtier motorisé supérieur (4) est disposé sur le récipient de travail (2) pour entraîner en rotation l'accessoire de travail rotatif (57) selon un axe de rotation (58).

10. Appareil électroménager de préparation culinaire chauffant selon la revendication 9, **caractérisé en ce que** le boîtier motorisé supérieur (4) comporte la patte de verrouillage (47), et **en ce que** la patte de verrouillage (47) est plus rigide que la patte de maintien (88) dans la direction correspondant à un soulèvement du boîtier motorisé supérieur (4) par rapport au récipient de travail (2).

11. Appareil électroménager de préparation culinaire chauffant selon l'une des revendications 9 ou 10, **caractérisé en ce que** le récipient de travail (2) présente un fond (25) et comporte un organe de centrage (28) s'élevant à partir du fond (25), et **en ce que** l'accessoire de travail rotatif (57) est monté sur l'organe de centrage (28).

12. Appareil électroménager de préparation culinaire chauffant selon l'une des revendications 1 à 11, **caractérisé en ce que** la partie supérieure (7) comprend un joint annulaire (9) venant en appui périphérique à l'intérieur du récipient de travail (2).

13. Appareil électroménager de préparation culinaire chauffant selon l'une des revendications 1 à 12, **caractérisé en ce que** la partie supérieure (7) comporte un couvercle intermédiaire (3), **en ce que** le récipient de travail (2) porte le couvercle intermédiaire (3), **en ce que** l'enceinte de travail (8) est définie par le récipient de travail (2) et le couvercle intermédiaire (3).

14. Appareil électroménager de préparation culinaire chauffant selon la revendication 13, **caractérisé en ce que** le couvercle intermédiaire (3) présente un conduit d'évacuation (95) mettant en communication l'enceinte de travail (8) avec l'extérieur de l'appareil.

15. Appareil électroménager de préparation culinaire chauffant selon les revendications 12 et 14, **caractérisé en ce que** le conduit d'évacuation (95) comporte une admission (96) communiquant avec l'enceinte de travail (8) et une évacuation (97) communiquant avec l'extérieur de l'appareil, **en ce que** le couvercle intermédiaire (3) comprend le joint annulaire (9), et **en ce que** l'évacuation (97) débouche au dessus du joint annulaire (9).

## Patentansprüche

1. Heizende Haushaltseinrichtung zur Nahrungsmittelzubereitung, die einen Arbeitsbehälter (2), einen oberen Teil (7), der durch Drehung auf dem Arbeitsbehälter (2) an zwei einander entgegengesetzten Verriegelungsstellen verriegelt ist, eine elektrische Heizvorrichtung (6) zum Erhitzen der Nahrungsmittel, die in dem Arbeitsbehälter (2) enthalten sind, umfasst, wobei ein Arbeitseinschluss (8) von dem Arbeitsbehälter (2) und dem oberen Teil (7) definiert ist, **dadurch gekennzeichnet, dass** eine der Verriegelungsstellen bei Überdruck in dem Arbeitseinschluss (8), der einen Druck unter dem oberen Teil (7) ausübt, verformbar ist, bevorzugt elastisch, um das Heben des oberen Teils (7) in Bezug auf den Arbeitsbehälter (2) zu erlauben und ein Leck aus dem Arbeitseinschluss (8) heraus zu schaffen.

2. Heizende Haushaltseinrichtung zur Nahrungsmittelzubereitung nach Anspruch 1, **dadurch gekennzeichnet, dass** der obere Teil (7) eine Verriegelungspratze (47) umfasst, dass der Arbeitsbehälter (2) eine Haltepratze (88) umfasst, dass die Verriegelungspratze (47) zum Eingriff unter der Haltepratze (88) kommt, wenn der obere Teil (7) auf dem Arbeitsbehälter (2) verriegelt ist, und dass die Haltepratze (88) und/oder die Verriegelungspratze (47) verformbar, bevorzugt elastisch, ist/sind.

3. Heizende Haushaltseinrichtung zur Nahrungsmittelzubereitung nach Anspruch 2, **dadurch gekennzeichnet, dass** der Arbeitsbehälter (2) ein Behältnis (20) umfasst, das einen Teil des Arbeitseinschlusses (8) definiert, und dass die Haltepratze (88) außerhalb des Behältnisses (20) montiert ist.

4. Heizende Haushaltseinrichtung zur Nahrungsmittelzubereitung nach einem der Ansprüche 2 oder 3, **dadurch gekennzeichnet, dass** der Arbeitsbehälter (2) einen Griff (80) umfasst, und dass der Griff (80) die Haltepratze (88) trägt.

5. Heizende Haushaltseinrichtung zur Nahrungsmittelzubereitung nach Anspruch 4, **dadurch gekennzeichnet, dass** der Griff (80) einen Griffkörper (82) umfasst, und dass die Haltepratze (88) auf den Griffkörper (82) geschraubt ist.

6. Heizende Haushaltseinrichtung zur Nahrungsmittelzubereitung nach Anspruch 5, **dadurch gekennzeichnet, dass** der Griff (80) eine Zierleiste (83) umfasst, die auf den Griffkörper (82) geclipst ist, und dass die Haltepratze (88) zwischen der Zierleiste (83) und dem Griffkörper (82) montiert ist.

7. Heizende Haushaltseinrichtung zur Nahrungsmittelzubereitung nach Anspruch 6, **dadurch gekennzeichnet, dass** die Zierleiste (83) eine C-Form aufweist.

8. Heizende Haushaltseinrichtung zur Nahrungsmittelzubereitung nach einem der Ansprüche 6 oder 7, **dadurch gekennzeichnet, dass** die Haltepratze (88) verformbar ist, bevorzugt elastisch, und dass die Verformung der Haltepratze (88) unter der Einwirkung der Verriegelungspratze (47), die von dem Druck, der in dem Inneren des Arbeitseinschlusses (8) herrscht, gehoben wird, die Zierleiste (83) aus dem Griffkörper (82) ausclipst.

9. Heizende Haushaltseinrichtung zur Nahrungsmittelzubereitung nach einem der Ansprüche 1 bis 8, **dadurch gekennzeichnet, dass** der obere Teil (7) ein oberes motorisiertes Gehäuse (4) umfasst, dass die heizende Haushaltseinrichtung zur Nahrungsmittelzubereitung ein drehendes Arbeitszubehör (57), das in dem Arbeitsbehälter (2) angeordnet ist, umfasst, und dass das obere motorisierte Gehäuse (4) auf dem Arbeitsbehälter (2) angeordnet ist, um das drehende Arbeitszubehör (57) entlang einer Drehungsachse (58) anzutreiben.

10. Heizende Haushaltseinrichtung zur Nahrungsmittelzubereitung nach Anspruch 9, **dadurch gekennzeichnet, dass** das obere motorisierte Gehäuse (4) die Verriegelungspratze (47) umfasst, und dass die Verriegelungspratze (47) in die Richtung, die einem Heben des oberen motorisierten Gehäuses (4) in Bezug auf den Arbeitsbehälter (2) entspricht, starrer ist als die Haltepratze (88).

11. Heizende Haushaltseinrichtung zur Nahrungsmittelzubereitung nach einem der Ansprüche 9 oder 10, **dadurch gekennzeichnet, dass** der Arbeitsbehälter (2) einen Boden (25) aufweist, und ein Zentrierelement (28), das ausgehend von dem Boden (25) hochragt, umfasst, und dass das drehende Arbeitszubehör (57) auf das Zentrierelement (28) montiert ist.

12. Heizende Haushaltseinrichtung zur Nahrungsmittelzubereitung nach einem der Ansprüche 1 bis 11, **dadurch gekennzeichnet, dass** der obere Teil (7) einen Dichtring (9) umfasst, der zur peripheren Auflage in dem Inneren des Arbeitsbehälters (2) kommt.

13. Heizende Haushaltseinrichtung zur Nahrungsmittelzubereitung nach einem der Ansprüche 1 bis 12, **dadurch gekennzeichnet, dass** der obere Teil (7) einen Zwischendeckel (3) umfasst, dass der Arbeitsbehälter (2) den Zwischendeckel (3) trägt, dass der Arbeitseinschluss (8) von dem Arbeitsbehälter (2) und dem Zwischendeckel (3) definiert ist.

14. Heizende Haushaltseinrichtung zur Nahrungsmittelzubereitung nach Anspruch 13, **dadurch gekennzeichnet, dass** der Zwischendeckel (3) eine Auslassleitung (95) aufweist, die den Arbeitseinschluss (8) mit der Außenseite der Einrichtung in Verbindung bringt.

15. Heizende Haushaltseinrichtung zur Nahrungsmittelzubereitung nach den Ansprüchen 12 und 14, **dadurch gekennzeichnet, dass** die Auslassleitung (95) einen Einlass (96) umfasst, der mit dem Arbeitseinschluss (8) in Verbindung steht, und einen Auslass (97), der mit der Außenseite der Einrichtung in Verbindung steht, dass der Zwischendeckel (3) den Dichtring (9) umfasst, und dass der Auslass (97) oberhalb des Dichtrings (9) mündet.

## Claims

1. Electrical household heating food-preparation appliance comprising a working vessel (2), a top portion (7) locked by rotation onto the working vessel (2) at two opposing locking points, an electrical heating device (6) for heating the food contained in the working vessel (2), a working chamber (8) being defined by the working vessel (2) and the top portion (7), **characterised in that** one of the locking points is deformable, preferably elastically, in case of overpressure in the working chamber (8) exerting pressure under the top portion (7), in order to allow the top portion (7) to lift off the working vessel (2) and create a leak out of the working chamber (8).

2. Electrical household heating food-preparation appliance according to claim 1, **characterised in that** the top portion (7) comprises a locking tab (47), **in that** the working vessel (2) comprises a retaining tab (88), **in that** the locking tab (47) engages under the retaining tab (88) when the top portion (7) is locked on the working vessel (2), and **in that** the retaining tab (88) and/or the locking tab (47) is/are deformable, preferably elastically.

3. Electrical household heating food-preparation appliance according to claim 2, **characterised in that** the working vessel (2) comprises a receptacle (20) defining a portion of the working chamber (8), and **in that** the retaining tab (88) is mounted outside the receptacle (20).

4. Electrical household heating food-preparation appliance according to one of claims 2 or 3, **characterised in that** the working vessel (2) comprises a handle (80), and **in that** the handle (80) carries the retaining tab (88).

5. Electrical household heating food-preparation appliance according to claim 4, **characterised in that** the handle (80) comprises a handle body (82), and **in that** the retaining tab (88) is screwed onto the handle body (82).

6. Electrical household heating food-preparation appliance according to claim 5, **characterised in that** the handle (80) comprises a surround (83) clipped onto the handle body (82) and **in that** the retaining tab (88) is mounted between the surround (83) and the handle body (82).

7. Electrical household heating food-preparation appliance according to claim 6, **characterised in that** the surround (83) has a C-shape.

8. Electrical household heating food-preparation appliance according to one of claims 6 or 7, **characterised in that** the retaining tab (88) is deformable, preferably elastically, and **in that** the deformation of the retaining tab (88) under the action of the locking tab (47) lifted off by the pressure present inside the working chamber (8) unclips the surround (83) from the handle body (82).

9. Electrical household heating food-preparation appliance according to one of claims 1 to 8, **characterised in that** the top portion (7) comprises a top motorised housing (4), **in that** the electrical household heating food-preparation appliance comprises a rotating working accessory (57) disposed in the working vessel (2), and **in that** the top motorised housing (4) is disposed on the working vessel (2) in order to drive in rotation the rotating working accessory (57) about an axis of rotation (58).

10. Electrical household heating food-preparation appliance according to claim 9, **characterised in that** the top motorised housing (4) comprises the locking tab (47), and **in that** the locking tab (47) is more rigid than the retaining tab (88) in the direction corresponding to a lifting of the top motorised housing (4) with respect to the working vessel (2).

11. Electrical household heating food-preparation appliance according to one of claims 9 or 10, **characterised in that** the working vessel (2) has a bottom (25) and comprises a centring member (28) that rises from the bottom (25), and **in that** the rotating working accessory (57) is mounted on the centring member (28).

12. Electrical household heating food-preparation appliance according to one of claims 1 to 11, **characterised in that** the top portion (7) comprises an annular seal (9) bearing peripherally inside the working vessel (2).

13. Electrical household heating food-preparation appliance according to one of claims 1 to 12, **characterised in that** the top portion (7) comprises an intermediate lid (3), **in that** the working vessel (2) carries the intermediate lid (3), **in that** the working chamber (8) is defined by the working vessel (2) and the intermediate lid (3).

14. Electrical household heating food-preparation appliance according to claim 13, **characterised in that** the intermediate lid (3) has an evacuation duct (95) that places the working chamber (8) in communication with the outside of the appliance.

15. Electrical household heating food-preparation appliance according to claims 12 and 14, **characterised in that** the evacuation duct (95) comprises an intake (96) that communicates with the working chamber (8) and an evacuation (97) that communicates with the outside of the appliance, **in that** the intermediate lid (3) comprises the annular seal (9), and **in that** the evacuation (97) opens above the annular seal (9).
